# EUROPÄISCHE PATENTSCHRIFT

(11) **EP 0 915 549 B1**
(45) Veröffentlichungstag und Bekanntmachung des Hinweises auf die Patenterteilung: **18.06.2014**
(21) Anmeldenummer: 98119067.1
(22) Anmeldetag: 08.10.1998
(51) Int. Cl.: H02H 7/08, H02H 7/093

(54) **Strömungsvorrichtung**
Flow device
Dispositif d'écoulement

(30) Priorität: 08.11.1997 DE 19749478
(43) Veröffentlichungstag der Anmeldung: 12.05.1999
(73) Patentinhaber: TTS Tooltechnic Systems AG & Co. KG, 73240 Wendlingen (DE)
(72) Erfinder: Maier, Frank, Dipl.-Ing., 72622 Nürtingen (DE)
(74) Vertreter: Bregenzer, Michael

(56) Entgegenhaltungen:
- EP-A- 0 479 609
- DE-A- 4 116 407
- US-A- 4 370 690

## Beschreibung

Die Erfindung betrifft eine Strömungsvorrichtung, insbesondere Saugvorrichtung, mit den Merkmalen des Oberbegriffs des Anspruchs 1.

Bei solchen Strömungsvorrichtungen handelt es sich beispielsweise um Saugvorrichtungen, wobei der Strömungskanal von einer Saugleitung bzw. einem Saugschlauch gebildet ist. Saugvorrichtungen dieser Art werden unter anderem bei spanabhebenden Fertigungsprozessen eingesetzt, um die vom Werkstück abgehobenen Späne abzusaugen.

Bei der Strömungsvorrichtung werden Störungen häufig nicht erkannt, was dazu führen kann, dass diese auf Grund des fehlerhaften Betriebs beschädigt werden kann.

Aus der EP-A-0 479 609 ist eine als Staubsauger ausgebildete Strömungsvorrichtung der eingangs genannten Gattung bekannt, die eine Überwachungseinrichtung zur Überwachung der Strömung während des Betriebs aufweist und wobei die Motordrehzahl und der Motorstrom als Betriebsparameter erfasst werden. Diese Überwachung dient dazu, fehlerhafte Betriebszustände zu erkennen. Infolge von Herstellungstoleranzen können Betriebszustände auftreten, bei denen die Erfassung der Motordrehzahl und des Motorstroms als Betriebsparameter nicht ausreichend ist. Darüberhinaus lässt dieser Stand der Technik offen, welche Reaktion auf die Erkennung eines fehlerhaften Betriebszustand folgt.

Aus der DE-A-41 16 407 ist es zwar bekannt, ein Warnsignal zu erzeugen, wenn der Staubbeutel des Staubsaugers einen maximalen Füllstand erreicht hat. Dieses Warnsignal wird jedoch nicht bei Erkennung von fehlerhaften Betriebszuständen erzeugt.

Es ist daher eine Aufgabe der vorliegenden Erfindung, Beschädigungen der Strömungsvorrichtung durch einen fehlerhaften Betriebszustand mit größerer Sicherheit zu vermeiden.

Diese Aufgabe wird erfindungsgemäß durch eine Strömungsvorrichtung mit den Merkmalen des Anspruchs 1 gelöst.

Die Erfassung der Betriebsparameter dient zur Überwachung der Strömungsvorrichtung, wobei neben Motorstrom und Motordrehzahl der Strömungskanalquerschnitt als Parameter erfasst werden. Mittels eines vorgegebenen Kennlinienfeldes oder einer Tabelle kann die Auswerteeinheit zu jedem gemessenen Motorstrom oder zu jeder gemessenen Motordrehzahl den zugehörigen Normwert aus den übrigen Betriebsparametern bestimmen und mit dem tatsächlich gemessenen Wert vergleichen. Unzulässige Betriebszustände können auf diese Art schnell erkannt werden, so dass entsprechende Gegenmaßnahmen ergriffen werden können. Dabei wird in vorteilhafter Weise auch der Strömungskanalquerschnitt von der Erfassungseinrichtung als Betriebsparameter erfasst, da somit ein geänderter Strömungskanalquerschnitt in den Normwert mit einfließt und eine korrekte Beurteilung des Betriebszustandes erlaubt.

Dadurch, dass der Strömungskanalquerschnitt mittels eines Einstellschalters vorgebbar ist, ist für dessen Erfassung keine aufwändige Sensorik notwendig. Da der Strömungskanalquerschnitt in der Regel unverändert ist, kann hier zugunsten des reduzierten Aufwands von einer automatischen Erfassung abgesehen werden.

Vorteilhafte Weiterbildungen des Gegenstandes der Erfindung gehen aus den Unteransprüchen hervor.

Zweckmäßigerweise ist der ermittelte Normwert die Mindestmotordrehzahl. Über die Drehzahl des Motors kann auch auf die Strömungsgeschwindigkeit des Strömungsmediums im Strömungskanal zurückgeschlossen werden.

Vorteilhafterweise wird die Motordrehzahl mittels einer permanenterregten Messspule der Erfassungseinrichtung erfasst, wobei die Messspule mit am Rotor angeordneten Rotorflügeln in magnetischem Kontakt steht. Es handelt sich hierbei um eine einfache und zuverlässige Möglichkeit der Drehzahlmessung.

Insbesondere ist der Einstellschalter von einem Potentiometer gebildet, das zweckmäßigerweise mehrere Raststellungen aufweist und gemeinsam mit der Auswerteeinheit einen Stufenschalter bildet. Ein derartiger Aufbau ist sehr einfach und kostengünstig.

Auch kann bei einer vorteilhaften Ausführung die den Motor speisende Versorgungsspannung von der Erfassungseinrichtung als Beriebsparameter erfasst werden. Unzulässige Schwankungen der Versorgungsspannung werden hierdurch erkannt.

Des weiteren ist es zweckmäßig, wenn die Versorgungsspannung in Form einer Wechselspannung vorliegt. Diese könnte beispielsweise aus dem üblichen 230-Volt-Netz gewonnen werden, das normalerweise zur Energieversorgung in Gebäuden verwendet wird.

Vor allem können bei der Erfassung des Motorstromes und der Versorgungsspannung während einer Halbwelle des Motorstromes bzw. der Versorgungsspannung mehrere Messwerte aufgenommen und anschließend zu einem Halbwellen-Mittelwert gemittelt werden. Auf diese Weise können große Messungenauigkeiten vermieden werden. Insbesondere ist es hierbei des weiteren möglich, die Halbwellen-Mittelwerte mehrerer aufeinanderfolgender Halbwellen zu ermitteln und zu einem Gesamtmittelwert zu mitteln. Dabei lassen sich Meßfehler noch weiter senken.

Vorteilhaft ist es außerdem, wenn eine manuell einstellbare Regelung des Motors vorgesehen ist, die insbesondere durch eine Phasenanschnittsteuerung realisiert ist. Auf diese Weise kann die Motorleistung an die jeweiligen Bedürfnisse angepaßt werden.

Dazuhin ist es vorteilhaft, wenn die Auswerteeinheit einen programmierbaren Mikrocontroller aufweist. Durch diese Maßnahme kann die Auswerteeinheit in einfacher Weise durch Änderung der Programmierung verändert werden, um sie beispielsweise an neue Bedürfnisse anzupassen.

Es ist günstig, wenn die Auswerteeinheit einen Speicher enthält, der insbesondere von einem Festwertspeicher und/oder EEPROM gebildet ist. Hierdurch wird die Flexibilität der Auswerteeinheit verbessert. In einem EEPROM bleiben die gespeicherten Daten auch nach dem Abtrennen der Spannungsversorgung erhalten.

Im Speicher der Auswerteeinheit kann ein Kennlinienfeld oder eine Tabelle abgelegt sein, mittels dem bzw. der der Normwert ermittelbar ist. Auf diese Weise ist zu jedem zulässigen Betriebszustand ein Normwert bestimmbar.

Es ist ebenfalls günstig, wenn eine Kalibriereinrichtung vorhanden ist, mittels der das Kennlinienfeld an neue Betriebsbedingungen anpaßbar ist. Beispielsweise kann hierdurch das Kennlinienfeld an eine geänderte Umgebungstemperatur angepaßt werden, bei der die Strömungsvorrichtung betrieben wird. Auch nach Reparaturarbeiten oder auf Grund von Alterungsprozessen der Bauteile der Strömungsvorrichtung kann eine Kalibrierung notwendig werden.

Insbesondere löst die Kalibriereinrichtung bei im Betrieb befindlicher Strömungsvorrichtung auf Anforderung den Kalibriervorgang aus, wobei das Kennlinienfeld an die momentan vorliegenden Betriebsparameter angepaßt wird. Hierbei ist kein aufwendiges Umprogrammieren des Kennlinienfeldes notwendig, sondern dessen Anpassung wird automatisch auf Grund der momentan vorliegenden Betriebsparameter durchgeführt. Hierbei werden auch die anderen zulässigen Betriebszustände ausgehend von dem während der Kalibrierung erfaßten Betriebszustand entsprechend neu definiert.

In einer weiteren zweckmäßigen Ausführung kann die Kalibriereinrichtung nur durch vorherige Eingabe einer Codesequenz betrieben werden, um ein versehentliches oder von Unbefugten durchgeführtes Kalibrieren zu verhindern.

Besonders zweckmäßig ist es, wenn die Kalibriereinrichtung in der Auswerteeinheit enthalten ist, so daß eine effektivere Ausnutzung des Bauraumes und der Kapazität der Auswerteeinheit erreicht wird.

Die im Speicher abgelegten Daten können mittels eines Kontrollgerätes auslesbar sein, um die Korrektheit der Daten zu überprüfen oder etwaige Fehler zu finden und zu korrigieren.

Eine weitere vorteilhafte Maßnahme besteht darin, daß die überwachungseinrichtung nach dem Anlegen der Versorgungsspannung einen Selbsttest durchführt, wobei die ordnungsgemäße Funktion der Strömungsvorrichtung überprüft und zweckmäßigerweise das Vorliegen eines Fehlers gegebenenfalls angezeigt wird. Hierdurch können Funktionsstörungen der Strömungsvorrichtung bereits beim Einschalten festgestellt werden.

Es ist dazuhin zweckmäßig, daß der Motor bei überhitzung von der Versorgungsspannung abgetrennt wird, wobei ein erneutes Anlegen der Versorgungsspannung an den Motor erst nach Beendigung des überhitzungszustandes möglich ist.

Im folgenden wird der Gegenstand der Erfindung anhand der beigefügten Zeichnung näher erläutert. Es zeigen:
- Fig. 1: ein Blockschaltbild einer überwachungseinrichtung einer erfindungsgemäßen Strömungsvorrichtung und
- Fig. 2: ein Ablaufdiagramm, das die beim Betrieb des bevorzugten Ausführungsbeispiels der Strömungsvorrichtung von der Überwachungseinrichtung durchzuführenden Schritte aufzeigt.

Bei einer Strömungsvorrichtung handelt es sich beispielsgemäß um eine Saugvorrichtung, die einen zur Erzeugung der Strömung in einem Strömungskanal von einem elektrischen Motor antreibbaren Rotor aufweist. Der Rotor ist mit Rotorflügeln versehen und somit ventilatorähnlich aufgebaut. Bei der Saugvorrichtung ist der Strömungskanal üblicherweise von einem flexiblen Saugschlauch gebildet. Derartige Saugvorrichtungen sind beispielsweise Industrie- oder Haushaltsstaubsauger. Selbstverständlich könnte es sich bei der erfindungsgemäßen Strömungsvorrichtung auch um Klimaanlagen, Heizanlagen oder ähnliches handeln.

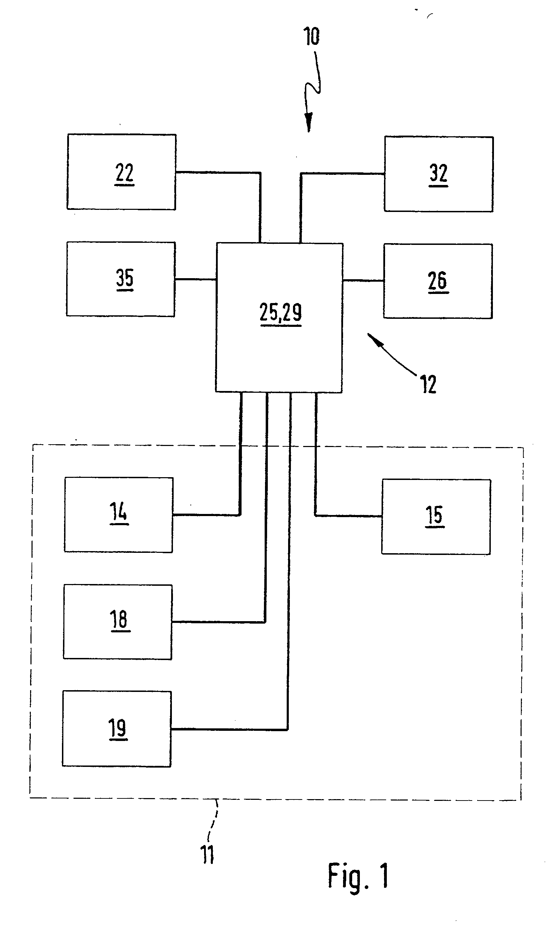

Die Strömungsvorrichtung verfügt über eine zur Überwachung der Strömung während des Betriebs vorgesehene überwachungseinrichtung 10, deren Blockschaltbild in Fig. 1 gezeigt ist. Die überwachungseinrichtung 10 weist eine Erfassungseinrichtung 11 auf, die zur Erfassung mehrerer Betriebsparameter während des Betriebes der Strömungsvorrichtung dient. Vorzugsweise werden als Betriebsparameter die zur Speisung des Motors dienende Versorgungsspannung, die Motordrehzahl, der durch den Motor fließende Motorstrom und der Strömungskanalquerschnitt erfaßt. Bei einer alternativen Ausführungsform wäre es ebenso möglich, lediglich die Motordrehzahl und den Motorstrom zu erfassen.

Die Erfassung des Strömungskanalquerschnitts ist insbesondere dann sinnvoll, wenn dieser veränderbar ist, z.B. durch das Austauschen eines den Strömungskanal bildenden Saugschlauches bei einer Saugvorrichtung. Das Erfassen der Versorgungsspannung dient in der Regel nur Kontrollzwecken, da diese meist auf einen bestimmten Wert, wie z.B. 230 V, eingeprägt ist. Wie bereits erwähnt, reicht das Erfassen von Motorstrom und Motordrehzahl zur Überwachung jedoch grundsätzlich aus.

Die von der Erfassungseinrichtung 11 erfaßten Betriebsparameter werden zur Auswertung einer Auswerteeinheit 12 zugeführt, die die gemessene Motordrehzahl oder den gemessenen Motorstrom mit einem aus den übrigen Betriebsparametern ermittelten Normwert vergleicht. Auf diese Weise kann die Auswerteeinheit 12 eine Beurteilung des aktuellen Betriebszustandes der Strömungsvorrichtung durchführen. Für die Bestimmung des Normwertes stehen als Betriebsparameter zumindest die Motordrehzahl bzw. der Motorstrom und beispielsgemäß zusätzlich der Strömungskanalquerschnitt und die Versorgungsspannung zur Verfügung.

Die Erfassungseinrichtung 11 umfaßt eine Drehzahlerfassungseinheit 14, die zur Messung der momentanen Motordrehzahl dient. Hierfür enthält die Drehzahlerfassungseinheit 14 eine permanenterregte Meßspule, die mit den Rotorflügeln des Rotors in magnetischem Kontakt steht. Durch die Drehung des Rotors werden die Rotorflügel an der Meßspule vorbeibewegt, so daß sich das von der Meßspule erzeugte Magnetfeld ändert und die Anzahl der pro Zeiteinheit vorbeibewegten Rotorflügel bestimmbar ist. Somit läßt sich auch die Motordrehzahl ermitteln. Selbstverständlich könnte die Drehzahlerfassungseinheit 14 auch andere Mittel zur Bestimmung der Motordrehzahl, wie z. B. ein Hall-Element, aufweisen, das mit einem Permanentmagneten zusammenarbeitet.

Die Erfassung des Strömungskanalquerschnitts erfolgt über einen Einstellschalter 15, mittels dem der Strömungskanalquerschnitt vorgebbar ist. Bei einer alternativen Ausführungsform könnte der Strömungskanalquerschnitt auch automatisch durch eine entsprechende Sensorik bestimmt werden, wovon beim bevorzugten Ausführungsbeispiel zugunsten eines reduzierten Bauteil- und Kostenaufwands abgesehen wurde.

Vorzugsweise ist der Einstellschalter 15 von einem Potentiometer gebildet, das insbesondere mehrere Raststellungen aufweist, wodurch zwischen mehreren bestimmten Strömungskanalquerschnitten umgeschaltet werden kann. Gemeinsam mit der Auswerteeinheit 12 bildet das Potentiometer dadurch einen Stufenschalter.

Zur Erfassung des Motorstromes bzw. der Versorgungsspannung umfaßt die Erfassungseinrichtung 11 eine Stromerfassungseinheit 18 und eine Spannungserfassungseinheit 19. Der Aufbau der Strom- bzw. Spannungserfassungseinheit 18 bzw. 19 ist grundsätzlich beliebig und kann an die jeweils vorliegenden Gegebenheiten angepaßt werden. Beispielsweise ist zu berücksichtigen, ob es sich bei der Versorgungsspannung um eine Gleich- oder Wechselspannung handelt.

Beim bevorzugten Ausführungsbeispiel liegt die Versorgungsspannung in Form einer Wechselspannung vor, die z.B. aus dem herkömmlichen 230-Volt-Spannungsnetz gewonnen werden kann. Beim Motorstrom handelt es sich daher um einen Wechselstrom.

Zur Messung des Motorstroms und der Versorgungsspannung werden während einer Halbwelle des Motorstromes bzw. der Versorgungsspannung mehrere Meßwerte aufgenommen und anschließend zu einem Halbwellen-Mittelwert gemittelt. Beispielsweise können pro Halbwelle 200 - 255 Meßwerte während 10 ms aufgenommen und anschließend arithmetisch zum Halbwellen-Mittelwert gemittelt werden. Bei diesem Meßverfahren können Meßungenauigkeiten sehr gut ausgeglichen werden, wodurch eine hohe Genauigkeit des Halbwellen-Mittelwertes erreicht ist.

Zur weiteren Verbesserung der Meßgenauigkeit ist es vorzugsweise vorgesehen, die Halbwellen-Mittelwerte mehrerer aufeinanderfolgender Halbwellen des Motorstromes bzw. der Versorgungsspannung zu bestimmen und die einzelnen Halbwellen-Mittelwerte wiederum zu einem Gesamtmittelwert arithmetisch zu mitteln. Je mehr Meßwerte pro Halbwelle aufgenommen werden und je mehr Halbwellen-Mittelwerte ermittelt werden, desto größer ist die Genauigkeit des Gesamtmittelwerts.

In der Auswerteeinheit 12 wird der Normwert bestimmt und mit dem gemessenen Motorstrom bzw. der gemessenen Motordrehzahl verglichen. Der Normwert kann beispielsweise aus einer Tabelle oder einem Kennlinienfeld erhalten werden. Bei einer Ausführungsvariante der Strömungsvorrichtung, deren Erfassungseinrichtung 11 lediglich den Motorstrom und die Motrodrehzahl erfaßt, könnte aus einer Tabelle der einer bestimmten Drehzahl zugeordnete Motorstrom abgelesen werden oder umgekehrt. Der auf diese Weise erhaltene Normwert wird anschließend mit dem gemessenen Wert (Motorstrom bzw. Motordrehzahl) verglichen.

Wird der Normwert in Abhängigkeit mehrerer Betriebsparameter vorgegeben, so ist der Aufbau der Tabelle oder des Kennlinienfeldes komplexer, die Bestimmung des Normwertes erfolgt jedoch nach dem gleichen Prinzip.

Weicht der in der Auswerteeinheit bestimmte Normwert um einen unzulässigen Betrag oder Faktor vom gemessenen Wert der Motordrehzahl bzw. des Motorstromes ab, so erzeugt die Auswerteeinheit 12 in einem Signalausgabegerät 22 ein Warnsignal. Beispielsgemäß ist das Signalausgabegerät 22 von einem Signalhorn gebildet, so daß es sich bei dem Warnsignal um einen akustischen Warnton handelt. Es versteht sich, daß das Warnsignal auch optisch oder gleichzeitig akustisch und optisch sein könnte.

Bei dem ermittelten Normwert könnte es sich beispielsweise um die Mindestmotordrehzahl handeln. Würde nun, z.B. auf Grund einer Verstopfung des Strömungskanals und/oder einer Filtereinrichtung, die Differenz zwischen der gemessenen Motordrehzahl und dem von der Mindestmotordrehzahl gebildeten Normwert um den unzulässigen Betrag bzw. Faktor abweichen, so würde die Auswerteeinheit 12 mittels des Signalausgabegerätes 22 ein Warnsignal erzeugen.

Die Auswerteeinheit 12 verfügt über einen programmierbaren Mikrocontroller 25 und einen zweckmäßigerweise von einem Festwertspeicher und/oder EEPROM gebildeten Speicher 26. Im Speicher 26 ist ein Kennlinienfeld oder einer Tabelle abgelegt, das bzw. die zur Ermittlung des Normwertesdurch den Mikrocontroller 25 der Auswerteeinheit 12 dient.

Beim bevorzugten Ausführungsbeispiel wird der Normwert insbesondere aus der im Speicher 26 abgelegten Tabelle abgelesen. Dieser kann dann mit dem gemessenen Motorstromwert und/oder mit der gemessenen Motordrehzahl verglichen werden.

Die im Speicher abgelegten Daten können mit Hilfe eines Kontrollgerätes ausgelesen werden, um deren Richtigkeit zu überprüfen und gegebenenfalls Fehler korrigieren zu können. Bei einem solchen Kontrollgerät kann es sich beispielsweise um einen Computer handeln, der die Daten des Speichers 26 auf seinem Bildschirm ausgeben kann.

Die Strömungsvorrichtung enthält außerdem eine manuell einstellbare Leistungsregelung des Motors, so daß die Leistung entsprechend den gegebenen Bedürfnissen eingestellt werden kann. Bei einer Saugvorrichtung wird auf diese Art die gewünschte Saugleistung gewählt. Da die Versorgungsspannung hier in Form einer Wechselspannung vorliegt, ist die Leistungsregelung des Motors vorteilhafterweise durch eine Phasenanschnittsteuerung realisiert. Der Aufbau und die Wirkungsweise einer solchen Phasenanschnittsteuerung sind bereits hinlänglich bekannt, so daß auf eine genauere Erläuterung an dieser Stelle verzichtet wird.

Auf Grund von Alterungsprozessen einzelner Bestandteile der Strömungsvorrichtung oder nach Reparaturen besteht die Möglichkeit, daß sich der zulässige Betriebsbereich einzelner oder mehrerer Betriebsparameter verändert. Dies könnte zu fehlerhaften Auswertungen in der Auswerteeinheit 12 führen und somit die Funktion der überwachungseinrichtung 10 beeinträchtigen. Aus diesem Grund verfügt das bevorzugte Ausführungsbeispiel über eine Kalibriereinrichtung 29, die vorzugsweise in der Auswerteeinheit 12 enthalten ist. Beispielsgemäß ist die Kalibriereinrichtung 29 im Mikrocontroller 25 der Auswerteeinheit 12 ausgeführt. In einer alternativen Variante der Strömungsvorrichtung könnte die Kalibriereinrichtung 29 selbstverständlich eine vom Mikrocontroller 25 selbständige Baueinheit bilden. Es wäre ebenfalls denkbar, die Kalibriereinrichtung 29 durch einen Trimpotentiometer zu bilden, über den die Bewertung des Motorstroms veränderbar ist.

Beim Ausführungsbeispiel löst die Kalibriereinrichtung 29 bei im Betrieb befindlicher Strömungsvorrichtung auf Anforderung den Kalibriervorgang aus, wobei die im Speicher 26 abgelegte Tabelle an die momentan vorliegenden Betriebsparameter angepaßt wird. Das bedeutet, daß alle anderen, ebenfalls zulässigen Betriebszustände ausgehend von dem zum Kalibrierzeitpunkt vorliegenden momentanen Betriebszustand durch eine Veränderung der Tabelleneinträge neu definiert werden. Bei diesem Verfahren ist eine Kalibrierung jederzeit und ohne großen Aufwand möglich, da keine aufwendigen Arbeiten an der überwachungseinrichtung 10 vorgenommen werden müssen.

Um zu verhindern, daß der Kalibriervorgang versehentlich oder durch Unbefugte ausgelöst wird, ist es vorteilhaft, wenn die Kalibriereinrichtung nur durch vorherige Eingabe einer Codesequenz betrieben werden kann. Im Falle der bevorzugten Ausführungsform ist die Codesequenz mittels des Einstellschalters 15 eingebbar. Erhält die Kalibriereinrichtung 29 die korrekte Codesequenz, so wird der Kalibriervorgang gestartet. Das Vorliegen eines Kalibrierwunsches wird im vorliegenden Fall lediglich nach dem Einschalten der Strömungsvorrichtung abgefragt. Es wäre alternativ hierzu jedoch ebenso möglich, die Abfrage nach einer vorliegenden Kalibrieranfrage zyklisch durchzuführen, so daß eine Kalibrierung jederzeit möglich wäre.

Zum Schutz der Strömungsvorrichtung verfügt diese über eine Notabschalteeinheit 32, die bei Überhitzung des Motors diesen von der Versorgungsspannung abtrennt. Zur Messung der Temperatur des Motors kann die Notabschalteeinheit 32 beispielsweise einen Temperaturfühler aufweisen. Bei überschreiten eines bestimmten Temperaturgrenzwertes wird dann ein Unterbrechungsschalter in der Notabschalteeinheit 32 betätigt, der den Motor von der Versorgungsspannung abtrennt. Beim Ausführungsbeispiel wird die Notabschalteeinheit 32 von der Auswerteeinheit 12 gesteuert. Die Auswerteeinheit 12 erhält ein Temperaturmeßsignal, wertet dieses aus und betätigt gegebenenfalls den Unterbrechungsschalter in der Notabschalteeinheit 32. Ein erneutes Anlegen der Versorgungsspannung an den Motor wird hier erst nach Beendigung des überhitzungszustandes möglich, so daß eine Wiederanlaufsperre des Motors nach einer überhitzung realisiert ist.

In einer alternativen Ausführungsform wäre es ebenso denkbar, die Notabschalteeinheit 32 von der Auswerteeinheit 12 abzutrennen, wobei der Unterbrechungsschalter in Abhängigkeit von der Motortemperatur direkt betätigbar ist. Beispielsweise könnte es sich beim Unterbrechungsschalter um einen sogenannten Bimetallschalter handeln.

Beim Einschalten der Strömungsvorrichtung, also nach dem Anlegen der Versorgungsspannung, führt die überwachungseinrichtung 10 einen Test durch, wobei die ordnungsgemäße Funktion der Strömungsvorrichtung überprüft wird. Zum Beispiel kann hierbei festgestellt werden, ob ein Rotorflügel gebrochen ist, ob auf alle Bereiche des Speichers 26 zugegriffen werden kann oder ob die Erfassungseinrichtung 11 ordnungsgemäß arbeitet. Beim Vorliegen eines Fehlers wird dieser im Speicher 26 abgelegt und kann über das Kontrollgerät ausgelesen werden. Beispielsgemäß wird zusätzlich das Signalausgabegerät 22 von der Auswerteeinheit 12 aktiviert, so daß das Vorliegen eines Fehlers für den Bediener erkennbar ist. Über das Kontrollgerät kann der Bediener anschließend den genauen Fehler bestimmen und entsprechende Maßnahmen ergreifen. Es versteht sich, daß das Signalausgabegerät 22 auch über ein Anzeigefeld verfügen könnte, das den genauen Fehler unmittelbar anzeigt, so daß eine zusätzliche Abfrage mittels des Kontrollgerätes entfallen könnte.

Der Mikrocontroller 25 der Auswerteeinheit 12 ist bei der vorliegenden Ausführungsform mit einer Versorgungs- und Hilfssteueranordnung 35 verbunden, die die notwendige und vorteilhafte periphere Beschaltung des Mikrocontrollers 25 darstellt. In der Versorgungs- und Hilfssteueranordnung 35 sind beispielsweise die Spannungsversorgung und die zur Steuerung des Mikrocontrollers notwendige Takterzeugung realisiert. Des weiteren können eine Reset-Schaltung zum Zurücksetzen des Mikrocontrollers 25, eine Netzsynchronisation oder ähnliche Funktionsblöcke in der Versorgungs- und Hilfssteueranordnung 35 vorgesehen werden.

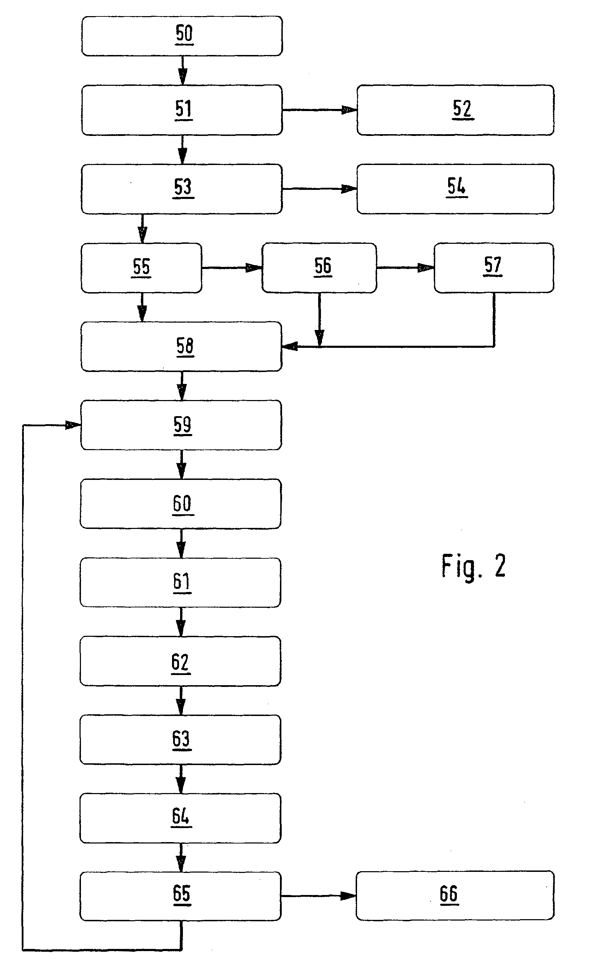

Anhand des in Fig. 2 dargestellten Ablaufplanes soll die Funktion der überwachungseinrichtung 10 gemäß den dargestellten Einzelschritten näher erläutert werden. Die einzelnen Arbeitsschritte im Ablaufplan wurden zur besseren Unterscheidbarkeit von den bisher verwendeten Bezugsziffern mit den Nummern 50 - 66 versehen, die folgende Bedeutung haben:
- 50:: Einschalten
- 51:: Abfrage: Speicher auslesen?
- 52:: Endlosschleife AUSLESEN
- 53:: Abfrage: Test o.k.?
- 54:: Fehler abspeichern, Signal geben.
- 55:: Abfrage: Eingabe der Codesequenz?
- 56:: Abfrage: Codesequenz korrekt?
- 57:: Kalibrieren
- 58:: Kalibrierdaten aus Speicher laden
- 59:: Strömungskanalquerschnitt erfassen
- 60:: Versorgungsspannung ermitteln
- 61:: Motorstrom ermitteln
- 62:: Motordrehzahl ermitteln
- 63:: Normwert bestimmen und mit Motordrehzahl bzw. Motorstrom vergleichen
- 64:: Warnsignal Ein/Aus
- 65:: Abfrage: Motor überhitzt?
- 66:: Endlosschleife WARTEN

Im ersten Schritt Nr. 50 wird die Strömungsvorrichtung an die Versorgungsspannung angelegt. Anschließend wird im Schritt 51 abgefragt, ob der Speicher 26 der Auswerteeinheit 12 mittels des Kontrollgerätes ausgelesen werden soll. Ist dies der Fall, so gibt die Auswerteeinheit 12 den Speicher 26 zum Auslesen frei und durchläuft die Endlosschleife AUSLESEN (Schritt 52).

Ist ein Auslesen nicht erwünscht, so folgt auf Schritt 51 der Schritt 53, bei dem abgefragt wird, ob der von der überwachungseinrichtung 10 durchgeführte Test zur Feststellung der ordnungsgemäßen Funktion der Strömungsvorrichtung einen Fehler ergeben hat oder nicht. Ist ein Fehler vorhanden, so wird in Schritt 54 der Fehler im Speicher 26 abgelegt und mittels des Signalausgabegerätes 22 das Warnsignal ausgegeben.

Wurde der Test ohne die Feststellung eines Fehlers durchgeführt, so folgt auf Schritt 53 der Schritt 55, der abfragt, ob die Eingabe der Codesequenz zur Inbetriebnahme der Kalibriereinrichtung 29 erfolgt. Wird diese Abfrage bejaht, so wird in der nachgeschalteten Abfrage 56 festgestellt, ob die Eingabe der Codesequenz korrekt war. Ist dies zutreffend, so wird der Schritt 57 durchlaufen, während dem der Kalibriervorgang durchgeführt wird. Anschließend werden die Kalibrierdaten im Schritt 58 in den Mikrocontroller 25 geladen.

Bei nicht erfolgter Eingabe der Codesequenz oder unkorrekter Eingabe der Codesequenz findet kein Kalibriervorgang (Schritt 57) statt, sondern die bereits im Speicher 26 befindlichen Kalibrierdaten werden in den Mikrocontroller 25 der Auswerteeinheit 12 geladen.

Nachfolgend wird in Schritt 59 der Schlauchdurchmesser erfaßt, was im vorliegenden Fall durch den am Einstellschalter 15 vorgegebenen Wert erfolgt. In den nachgeschalteten Schritten 60 - 62 werden in der Erfassungseinrichtung 11 dann nacheinander die Versorgungsspannung, der Motorstrom und die Motordrehzahl ermittelt. Anschließend wird der Normwert in Abhängigkeit der betreffenden Betriebsparameter ermittelt und mit der gemessenen Motordrehzahl oder dem gemessenen Motorstrom verglichen (Schritt 63). Weicht die gemessene Motordrehzahl bzw. der gemessene Motorstrom vom ermittelten Normwert um den unzulässigen Betrag oder Faktor ab, so wird im Schritt 64 das Warnsignal über das Signalausgabegerät 22 ausgegeben. Liegt hingegen die Differenz zwischen dem gemessenen Wert und dem ermittelten Normwert innerhalb des zulässigen Bereiches, so wird das Warnsignal ausgeschaltet.

Im nächsten Schritt 65 wird schließlich überprüft, ob eine überhitzung des Motors vorliegt. Ist dies der Fall, so wird die Auswerteeinheit 12 in eine endlose Warteschleife versetzt, wodurch der weitere Betrieb des Motors verhindert wird (Schritt 66).

Ist der Motor nicht überhitzt, so folgt auf Schritt 65 wieder der Schritt 59, bei dem der Strömungskanalquerschnitt erfaßt wird.

Die Schritte 59 - 65 werden dann während des Betriebes der Strömungsvorrichtung sequenziell durchlaufen, falls der Motor nicht überhitzt ist. Erst nach dem Ausschalten und dem erneuten Einschalten der Strömungsvorrichtung werden auch die Schritte 50 - 58 wieder durchgeführt.

## Patentansprüche

1. Strömungsvorrichtung, insbesondere Saugvorrichtung, mit einem von einem elektrischen Motor antreibbaren Rotor zur Erzeugung einer Strömung in einem Strömungskanal, mit einer Überwachungseinrichtung (10) zur Überwachung der Strömung während des Betriebs der Strömungsvorrichtung, die eine Erfassungseinrichtung (11) aufweist, die wenigstens die Motordrehzahl und den Motorstrom als Betriebsparameter erfasst und zur Auswertung einer Auswerteeinheit (12) zuführt, in der die gemessene Motordrehzahl oder der gemessene Motorstrom mit einem entsprechenden Normwert verglichen wird, der in Abhängigkeit des oder der übrigen Betriebsparameter vorgegeben ist, **dadurch gekennzeichnet, dass** ein Warnsignal erzeugt wird, wenn der gemessene Wert vom ermittelten Normwert um einen unzulässigen Betrag oder Faktor abweicht, dass auch der Strömungskanalquerschnitt von der Erfassungseinrichtung (11) als Betriebsparameter erfasst und mittels eines Einstellschalters (15) vorgebbar ist.

2. Strömungsvorrichtung nach Anspruch 1, **dadurch gekennzeichnet, dass** der ermittelte Normwert die Mindestmotordrehzahl ist.

3. Strömungsvorrichtung nach Anspruch 1 oder 2, **dadurch gekennzeichnet, dass** die Motordrehzahl mittels einer permanenterregten Messspule der Erfassungseinrichtung (11) erfasst wird, wobei die Messspule mit am Rotor angeordneten Rotorflügeln in magnetischem Kontakt steht.

4. Strömungsvorrichtung nach einem der vorhergehenden Ansprüche, **dadurch gekennzeichnet, dass** der Einstellschalter (15) von einem Potentiometer gebildet ist, das insbesondere mehrere Raststellungen aufweist und gemeinsam mit der Auswerteeinheit (12) einen Stufenschalter bildet.

5. Strömungsvorrichtung nach einem der vorhergehenden Ansprüche, **dadurch gekennzeichnet, dass** die den Motor speisende Versorgungsspannung von der Erfassungseinrichtung (11) als Betriebsparameter erfasst wird.

6. Strömungsvorrichtung nach Anspruch 5, **dadurch gekennzeichnet, dass** die Versorgungsspannung in Form einer Wechselspannung vorliegt.

7. Strömungsvorrichtung nach Anspruch 6, **dadurch gekennzeichnet, dass** bei der Erfassung des Motorstromes und der Versorgungsspannung während einer Halbwelle des Motorstromes bzw. der Versorgungsspannung mehrere Messwerte aufgenommen und anschließend zu einem Halbwellen-Mittelwert gemittelt werden.

8. Strömungsvorrichtung nach Anspruch 7, **dadurch gekennzeichnet, dass** bei der Erfassung des Motorstromes und der Versorgungsspannung die Halbwellen-Mittelwerte mehrerer aufeinanderfolgender Halbwellen ermittelt und zu einem Gesamtmittelwert gemittelt werden.

9. Strömungsvorrichtung nach einem der Ansprüche 6 bis 8, **dadurch gekennzeichnet, dass** eine manuell einstellbare Leistungsregelung des Motors vorgesehen ist, die insbesondere durch eine Phasenabschnittsteuerung realisiert ist.

10. Strömungsvorrichtung nach einem der vorhergehenden Ansprüche, **dadurch gekennzeichnet, dass** die Ausweteeinheit (12) einen programmierbaren Mikrocontroller (25) aufweist.

11. Strömungsvorrichtung nach einem der vorhergehenden Ansprüche, **dadurch gekennzeichnet, dass** die Ausweteeinheit (12) einen Speicher (26) enthält, der insbesondere von einem EEPROM gebildet ist.

12. Strömungsvorrichtung nach Anspruch 11, **dadurch gekennzeichnet, dass** im Speicher (26) der Auswerteeinheit (12) ein Kennlinienfeld oder eine Tabelle abgelegt ist, mittels dem bzw. der der Normwert ermittelbar ist.

13. Strömungsvorrichtung nach Anspruch 12, **dadurch gekennzeichnet, dass** eine Kalibriereinrichtung (29) vorhanden ist, mittels der das Kennlinienfeld an neue Betriebsbedingungen anpassbar ist.

14. Strömungsvorrichtung nach Anspruch 13, **dadurch gekennzeichnet, dass** die Kalibriereinrichtung (29) bei im Betrieb befindlicher Strömungsvorrichtung auf Anforderung den Kalibriervorgang auslöst, wobei das Kennlinienfeld an die momentan vorliegenden Betriebsparameter angepasst wird.

15. Strömungsvorrichtung nach Anspruch 13 oder 14, **dadurch gekennzeichnet, dass** die Kalibriereinrichtung (29) nur durch vorherige Eingabe einer Codesequenz betrieben werden kann.

16. Strömungsvorrichtung nach einem der Ansprüche 13 bis 15, **dadurch gekennzeichnet, dass** die Kalibriereinrichtung (29) in der Auswerteeinheit (12) enthalten ist.

17. Strömungsvorrichtung nach einem der Ansprüche 11 bis 16, **dadurch gekennzeichnet, dass** die im Speicher (26) abgelegten Daten mittels eines Kontrollgerätes auslesbar sind.

18. Strömungsvorrichtung nach einem der vorhergehenden Ansprüche, **dadurch gekennzeichnet, dass** die Überwachungseinrichtung (10) nach dem Anlagen der Versorgungsspannung einen Test durchführt, wobei die ordnungsgemäße Funktion der Strömungsvorrichtung überprüft und zweckmäßigerweise das Vorliegen eines Fehlers gegebenenfalls angezeigt wird.

19. Strömungsvorrichtung nach einem der vorhergehenden Ansprüche, **dadurch gekennzeichnet, dass** der Motor bei Überhitzung von der Versorgungsspannung abgetrennt wird, wobei ein erneutes Anlagen der Versorgungsspannung an den Motor erst nach Beendigung des Überhitzungszustandes möglich ist.

## Claims

1. Flow device, in particular suction device, comprising a rotor which can be driven by an electric motor to generate a flow in a flow passage, further comprising a monitoring device (10) for monitoring the flow during the operation of the flow devices, the monitoring device (10) comprising a detection device (11) which detects at least the motor speed and the motor current as operating parameters and feeds these values for evaluation to an evaluation unit (12) in which the measured motor speed or the measured motor current is compared to a corresponding standard value which is preset as a function of the remaining operating parameter(s), **characterised in that** a warning signal is generated if the measured value deviates from the determined standard value by an excessive amount or factor, and **in that** the flow passage cross-section is also detected as an operating parameter by the detection device (11) and can be preset by means of an adjusting switch (15).

2. Flow device according to claim 1, **characterised in that** the determined standard value is the minimum motor speed.

3. Flow device according to claim 1 or 2, **characterised in that** the motor speed is detected by means of a permanently excited measuring coil of the detection device (11), the measuring coil being in magnetic contact with rotor blades located on the rotor.

4. Flow device according to any of the preceding claims, **characterised in that** the adjusting switch (15) is represented by a potentiometer which in particular has a plurality of detent positions and forms a multi-position switch together with the evaluation unit (12).

5. Flow device according to any of the preceding claims, **characterised in that** the supply voltage feeding the motor is detected by the detection device (11) as an operating parameter.

6. Flow device according to claim 5, **characterised in that** the supply voltage is present in the form of an alternating voltage.

7. Flow device according to claim 6, **characterised in that**, during the detection of the motor current and the supply voltage, several measured values are recorded during a half-wave of the motor current or the supply voltage respectively and then averaged to form a half-wave average value.

8. Flow device according to claim 7, **characterised in that**, during the detection of the motor current and the supply voltage, the half-wave average values of several successive half-waves are determined and averaged to form an overall average value.

9. Flow device according to any of claims 6 to 8, **characterised in that** a manually adjustable power control of the motor is provided, which is in particular implemented as a phase section control.

10. Flow device according to any of the preceding claims, **characterised in that** the evaluation unit (12) comprises a programmable microcontroller.

11. Flow device according to any of the preceding claims, **characterised in that** the evaluation unit (12) includes a memory (26) which is in particular represented by an EEPROM.

12. Flow device according to claim 11, **characterised in that** a family of characteristics or a table by means of which the standard value can be determined is stored in the memory (26) of the evaluation unit (12).

13. Flow device according to claim 12, **characterised in that** a calibration device (29) is provided, by means of which the family of characteristics can be adapted to new operating conditions.

14. Flow device according to claim 13, **characterised in that**, if the flow device is in operation, the calibration device (29) triggers the calibration process on request, wherein the family of characteristics is adapted to the current operating parameters.

15. Flow device according to claim 13 or 14, **characterised in that** the calibration device (29) can only be operated after a code sequence has been input.

16. Flow device according to any of claims 13 to 15, **characterised in that** the calibration device (29) is contained in the evaluation unit (12).

17. Flow device according to any of claims 13 to 16, **characterised in that** the data stored in the memory (26) can be read out by means of a checking device.

18. Flow device according to any of the preceding claims, **characterised in that** the monitoring device (10) conducts a test following the application of the supply voltage, wherein the correct function of the flow device is checked and the presence of any faults is expediently indicated.

19. Flow device according to any of the preceding claims, **characterised in that** the motor is disconnected from the supply voltage if overheated, a renewed application of the supply voltage to the motor being possible only after the termination of the overheated state.

## Revendications

1. Dispositif d'écoulement, en particulier dispositif d'aspiration, comprenant un rotor, pouvant être entraîné par un moteur électrique, servant à produire un écoulement dans un canal d'écoulement, comprenant un système de surveillance (10) servant à surveiller l'écoulement lors du fonctionnement du dispositif d'écoulement, qui présente un système d'acquisition (11), qui acquiert au moins le régime du moteur et le courant de moteur comme paramètres de fonctionnement et les amène, pour évaluation, à une unité d'évaluation (12), dans laquelle le régime du moteur mesuré ou le courant du moteur mesuré est comparé à une valeur standard correspondante, qui est prédéfinie en fonction du ou des autres paramètres de fonctionnement, **caractérisé en ce qu'**un signal d'avertissement est généré lorsque la valeur mesurée diffère de la valeur standard déterminée d'une valeur ou d'un facteur non admissible, **en ce qu'**également la section transversale du canal d'écoulement est acquise, en tant que paramètre de fonctionnement par le système de d'acquisition (11) et peut être prédéfinie au moyen d'un commutateur de réglage (15).

2. Dispositif d'écoulement selon la revendication 1, **caractérisé en ce que** la valeur standard déterminée est le régime minimal du moteur.

3. Dispositif d'écoulement selon la revendication 1 ou 2, **caractérisé en ce que** le régime du moteur est acquis au moyen d'une bobine de mesure à excitation permanente du système d'acquisition (11), sachant que la bobine de mesure se trouve en contact magnétique avec des pales de rotor disposées au niveau du rotor.

4. Dispositif d'écoulement selon l'une quelconque des revendications précédentes, **caractérisé en ce que** le commutateur de réglage (15) est formé par un potentiomètre, qui présente en particulier plusieurs positions d'enclenchement et qui forme conjointement avec l'unité d'évaluation (12) un commutateur à paliers.

5. Dispositif d'écoulement selon l'une quelconque des revendications précédentes, **caractérisé en ce que** la tension d'alimentation alimentant le moteur est acquise par le système d'acquisition (11) en tant que paramètre de fonctionnement.

6. Dispositif d'écoulement selon la revendication 5, **caractérisé en ce que** la tension d'alimentation se présente sous la forme d'une tension alternative.

7. Dispositif d'écoulement selon la revendication 6, **caractérisé en ce que**, lors de l'acquisition du courant du moteur et de la tension d'alimentation, plusieurs valeurs de mesure sont enregistrées pendant une demi-onde du courant du moteur ou de la tension d'alimentation et sont ensuite moyennées en une valeur moyenne de demi-ondes.

8. Dispositif d'écoulement selon la revendication 7, **caractérisé en ce que** lors de l'acquisition du courant du moteur et de la tension d'alimentation, les valeurs moyennes de demi-ondes de plusieurs demi-ondes se suivant les unes les autres sont moyennées en une valeur moyenne globale.

9. Dispositif d'écoulement selon l'une quelconque des revendications 6 à 8, **caractérisé en ce qu'**un réglage de la puissance du moteur pouvant être réglé manuellement est prévu, lequel est réalisé en particulier par une commande par redressement à la sortie des phases.

10. Dispositif d'écoulement selon l'une quelconque des revendications précédentes, **caractérisé en ce que** l'unité d'évaluation (12) présente un microcontrôleur (25) programmable.

11. Dispositif d'écoulement selon l'une quelconque des revendications précédentes, **caractérisé en ce que** l'unité d'évaluation (12) comporte une mémoire (26), qui est formée en particulier par un EEPROM.

12. Dispositif d'écoulement selon la revendication 11, **caractérisé en ce qu'**une table des caractéristiques ou un tableau sont enregistrés dans la mémoire (26) de l'unité d'évaluation (12), lesquels permettent de déterminer la valeur standard.

13. Dispositif d'écoulement selon la revendication 12, **caractérisé en ce qu'**un système de calibrage (29) est présent, lequel permet d'adapter la table des caractéristiques aux nouvelles conditions de fonctionnement.

14. Dispositif d'écoulement selon la revendication 13, **caractérisé en ce que** le système d'étalonnage (29) déclenche, lorsque le dispositif d'écoulement se trouve en fonctionnement, sur demande l'opération de calibrage, sachant que la table des caractéristiques est adaptée au paramètre de fonctionnement présent de manière instantanée.

15. Dispositif d'écoulement selon la revendication 13 ou 14, **caractérisé en ce que** le système de calibrage (29) peut fonctionner seulement en entrant au préalable une séquence de codes.

16. Dispositif d'écoulement selon l'une quelconque des revendications précédentes 13 à 15, **caractérisé en ce que** le système de calibrage (29) est compris dans l'unité d'évolution (12).

17. Dispositif d'écoulement selon l'une quelconque des revendications 11 à 16, **caractérisé en ce que** les données enregistrées dans la mémoire (26) peuvent être lues au moyen d'un appareil de contrôle.

18. Dispositif d'écoulement selon l'une quelconque des revendications précédentes, **caractérisé en ce que** le système de surveillance (10) exécute un test après l'application de la tension d'alimentation, sachant que le fonctionnement convenable du dispositif d'écoulement est vérifié et que, de manière appropriée, la présence d'une erreur est éventuellement indiquée.

19. Dispositif d'écoulement selon l'une quelconque des revendications précédentes, **caractérisé en ce que** le moteur est séparé, en cas de surchauffe, de la tension d'alimentation, sachant qu'il est possible d'appliquer à nouveau sur le moteur la tension d'alimentation seulement une fois l'état de surchauffe passé.
